# EUROPÄISCHE PATENTSCHRIFT

(11) **EP 3 078 112 B1**
(45) Veröffentlichungstag und Bekanntmachung des Hinweises auf die Patenterteilung: **14.10.2020**
(21) Anmeldenummer: 15733443.4
(22) Anmeldetag: 01.07.2015
(51) Int. Cl.: H02P 6/16, G01D 5/14, G01P 13/00, H02P 7/18

(54) **AKTUATOR MIT POSITIONSSENSOR**
ACTUATOR WITH POSITION SENSOR
ACTIONNEUR AVEC CAPTEUR DE POSITION

(30) Priorität: 02.07.2014 DE 102014212804
(43) Veröffentlichungstag der Anmeldung: 12.10.2016
(73) Patentinhaber: Vitesco Technologies GmbH, 30165 Hannover (DE)
(72) Erfinder: WALLRAFEN, Werner, 65795 Hattersheim (DE)
(74) Vertreter: Waldmann, Georg Alexander
(86) Internationale Anmeldenummer: PCT/EP2015/064956
(87) Internationale Veröffentlichungsnummer: WO 2016/001289

(56) Entgegenhaltungen:
- EP-A1- 0 593 925
- EP-A2- 2 680 431
- DE-A1-102008 047 494

## Beschreibung

Die vorliegende Erfindung betrifft einen Aktuator mit einem von einer Steuereinheit angesteuerten elektrischen Motor und einem aktiven elektronischen Positionssensor zur Erfassung der Aktuatorposition mit den Merkmalen des Oberbegriffs von Patentanspruch 1.

Aktuatoren werden für die verschiedensten Zwecke eingesetzt, beispielsweise zur Betätigung von Ventilen oder Klappen in Kraftfahrzeugen. Die hier angesprochenen Aktuatoren besitzen einen elektrischen Motor, der von einer Steuereinheit, beispielsweise einer Motorsteuerelektronik (ECU), angesteuert wird. Der elektrische Motor kann beispielsweise ein Betätigungselement betreiben, dessen Lageveränderung über ein Getriebe von einem Positionssensor erfasst wird. Zum Betreiben dieses Positionssensors wird eine Versorgungsspannung benötigt.

Aktive Positionssensoren für die Lageerfassung bzw. Lageregelung von Aktuatoren werden beim Stand der Technik mit separaten Zuleitungen mit elektrischer Energie (i. d. R. Spannung) versorgt. Es gibt dabei verschiedene Ausgangssignale für die Übertragung der Aktuatorposition. Die bekannte analoge Schnittstelle ist ratiometrisch zur Versorgungsspannung. Daher muss hierbei die Versorgungsspannung, die als Referenz in der Steuereinheit erzeugt wird, auch direkt mit dem Positionssensor verbunden werden. Anders verhält es sich bei versorgungsspannungsunabhängigen (nicht-ratiometrischen) Ausgangssignalen von Positionssensoren. Hier muss nicht zwangsläufig die Versorgungsspannung aus der Steuereinheit zugeführt werden, wenn der Sensor anders mit Energie versorgt werden kann. Nach wie vor besteht jedoch das Problem, dass eine vom Motor separate Versorgungsspannung, beispielsweise von 5 V, für die Positionssensoren über separate Zuleitungen zugeführt werden muss. Dies gilt auch für die neu eingeführte digitale Signalübertragung der Position, wo beispielsweise für eine Punkt-zu-Punkt-Verbindung (kein Bus) ein digitales serielles SENT-Protokoll verwendet wird.

Es versteht sich, dass die Anordnung von derartigen separaten Zuleitungen aufwändig ist.

Aus der US 5 389 864 ist ein Aktuatorsystem mit den Merkmalen des Oberbegriffs von Patentanspruch 1 bekannt. Bei diesem System wird die elektrische Energie für den Betrieb des Positionssensors über die Motoranschlüsse der Ansteuerleitung des Motors von der Steuereinheit entnommen.

Ein weiteres Aktuatorsystem mit entsprechenden Merkmalen ist aus der US 6 545 441 B1 bekannt.

Aus der DE 199 47 698 A1 ist eine Anschlussschaltung für ein Messgerät bekannt, bei der die Anpassung einer Spannungsversorgung durch den Einsatz eines Stromrichters beschrieben ist.

Aus EP 2 680 431 A1 ist eine Versorgungsschaltung für mehrere Positionssensoren mehrerer DC-Motoren offenbart, worin die Versorgung der Positionssensoren über die Motoranschlüsse erfolgt ist.

Aus der EP 0 593 925 A1 ist eine Vorrichtung zum Erfassen der Bewegung eines bewegbaren Teils bekannt, bei der die von zwei Lagesensoren abgegebenen Lagesignale zu einem Signal addiert werden, das über eine Leitung zu einer Auswerteanordnung geführt ist. Die von den Lagesensoren zugeordneten Lagebereiche weisen ein Überlappungsgebiet auf. Den Lagesignalen werden unterschiedliche diskrete Werte zugewiesen, die in der Auswerteanordnung mit einfachen Mitteln auswertbar sind.

Die DE 10 2008 047 494 A1 offenbart einen elektronisch kommutierten Gleichstrommotor, insbesondere für eine elektronisch geregelte Bremsanlage, umfassend einen gemeinsamen elektronischen Regler, mit mehreren elektrischen Mitteln, insbesondere mit mehreren Hallsensoren zur Erfassung von Rotordrehlage und/oder zur Erfassung von einer Rotordrehzahl. Dabei sind sämtliche elektrische Mittel über eine elektrische Versorgungsschaltung im gemeinsamen Regler mit Hilfe einer Serienschaltung im Anschluss an einen oder mehrere Wicklungsstränge des Gleichstrommotors elektrisch versorgt sind.

Der Erfindung liegt die Aufgabe zugrunde, einen Aktuator der eingangs beschriebenen Art zur Verfügung zu stellen, der sich durch einen besonders einfachen Aufbau auszeichnet.

Diese Aufgabe wird erfindungsgemäß bei einem Aktuator der angegebenen Art durch die kennzeichnenden Merkmale von Patentanspruch 1 gelöst.

Bei der erfindungsgemäßen Lösung entfallen separate Zuleitungen, über die der Positionssensor mit einer separaten Versorgungsspannung beaufschlagt wird. Stattdessen nutzt die Erfindung die ohnehin vorhandene Ansteuerleitung bzw. Versorgungsleitung des Motors von der vorgesehenen Steuereinheit auch für die Versorgung des Positionssensors mit elektrischer Energie. Zusätzliche Leitungen können daher entfallen.

Bei der erfindungsgemäßen Lösung ist vorgesehen, dass mindestens ein Motoranschluss in periodischen Abständen eine positive getaktete Spannung dadurch liefert, dass hinter dem Abgriff der Motoranschlüsse eine Gleichrichterschaltung mit Vorwiderstand und Speicherkondensator vorgesehen ist. Dabei sind die Anschlüsse der Ansteuerspannungen U_{M1} und U_{M2} für den Betrieb des Motors so geschaltet, dass während eines Motorleerlaufs (Anschlüsse U_{M1} und/oder U_{M2} sind über Transistoren hochohmig geschaltet) und/oder während einer Motorbremse (U_{M1} und U_{M2} sind auf gleiches Potenzial geschaltet → Kurzschluss zwischen U_{M1} und U_{M2}) mindestens einer der beiden Motoranschlüsse U_{M1},U_{M2} mit einer positiven Spannung U_{B} geschaltet ist.

Ferner ist in einer Ausgestaltung vorgesehen, dass eine gemeinsame Masse für eine Brückenschaltung der Motoransteuerung und Signalauswertung vorhanden ist.

Bei der erfindungsgemäßen Lösung bleiben die Ausgangssignale des Positionssensors innerhalb eines festgelegten Bereiches von der Versorgungsspannung unabhängig (nicht-ratiome-trisch.

Besonders bevorzugt wird eine Ausführungsform, die dadurch gekennzeichnet ist, dass hinter dem Abgriff der Motoranschlüsse der Ansteuerleitung von der Steuereinheit eine Gleichrichterschaltung mit Speicherkondensator zur Erzeugung einer gefilterten Gleichspannung angeordnet ist, die den elektronischen Positionssensor mit einer ausreichenden Spannung versorgt. Hierbei kann auch ein Vorwiderstand vorgesehen sein.

Die Gleichrichterschaltung kann hierbei eine Brückenschaltung umfassen.

Bei einer weiteren Ausführungsform ist eine separate Masseleitung zum Positionssensor geführt, wobei die Gleichrichterschaltung nur eine Halbbrücke aufweist.

Ferner kann die Gleichrichterschaltung auch aus aktiven Transistoren bestehen. Hierbei ergibt sich ein kleinerer Spannungsabfall.

Die Erfindung ist auch für einen bürstenlosen Motor mit zwei oder mehr Anschlüssen geeignet.

Die Erfindung wird nachfolgend anhand von Ausführungsbeispielen in Verbindung mit der Zeichnung im Einzelnen erläutert. Es zeigen:
- Figur 1: ein Blockschaltbild einer ersten Ausführungsform eines Aktuators mit Steuereinheit und Stromversorgung; und
- Figur 2: ein Blockschaltbild einer zweiten Ausführungsform eines Aktuators mit Steuereinheit und Stromversorgung.

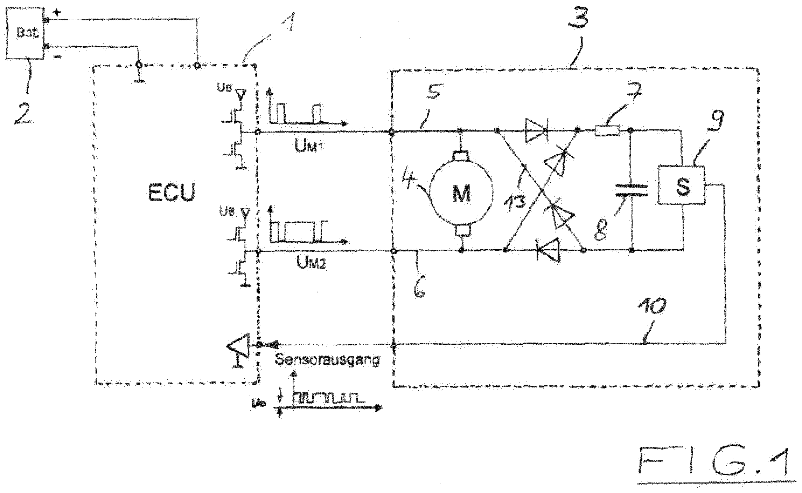

Figur 1 zeigt das Blockschaltbild eines Aktuators 3, der von einer Steuereinheit (ECU) 1 angesteuert wird, welche von einer Batterie 2 mit Spannung versorgt wird. Der Aktuator 3 besitzt einen elektrischen Motor 4, der ein hier nicht gezeigtes Betätigungselement betätigt, dessen Position bzw. Positionsveränderung von einem Positionssensor 9 erfasst wird. Die entsprechende Position bzw. Positionsveränderung wird vom Positionssensor 9 in der Form von elektrischen Signalen über eine Leitung 10 der Steuereinheit 1 zugeführt.

Der elektrische Motor 4 wird über die Leitungen 5, 6 der Steuereinheit 1 mit getakteter Spannung beaufschlagt. Die Versorgung des Motors 4 wird ferner dazu benutzt, den Positionssensor 9 mit elektrischer Energie (Gleichspannung) zu betreiben, so dass separate Zuleitungen für den Betrieb des Sensors 9 entfallen können. Im Einzelnen ist dabei hinter dem Abgriff der Motoranschlüsse eine Gleichrichterschaltung mit Vorwiderstand 7 und Speicherkondensator 8 vorgesehen. Hierdurch wird eine gefilterte Gleichspannung erzeugt, die den elektronischen Positionssensor 9 mit einer ausreichenden Spannung versorgt.

Bei der in Figur 1 dargestellten Ausführungsform weist die Gleichrichterschaltung eine Dioden umfassende Brückenschaltung 13 auf. Es ist hierbei vorgesehen, dass mindestens ein Anschluss in periodischen Abständen eine positive Spannung liefert und eine gemeinsame Masse für die Brückenschaltung und Signalauswertung vorhanden ist. Dabei sind die Anschlüsse der Ansteuerspannung U_{M1} und U_{M2} für den Betrieb des Motors 4 so geschaltet, dass während eines Motorleerlaufs und/oder während einer Motorbremse mindestens einer der beiden Motoranschlüsse U_{M1}, U_{M2} mit einer positiven Spannung U_{B} geschaltet ist.

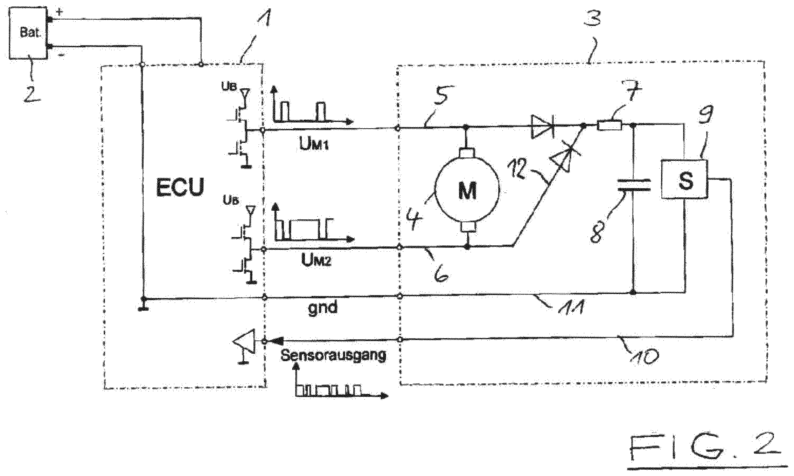

Die in Figur 2 dargestellte Ausführungsform unterscheidet sich von der der Figur 1 im Wesentlichen nur dadurch, dass eine separate Masseleitung 11 von der Steuereinheit 1 zum Positionssensor 9 geführt ist. Die Gleichrichterschaltung umfasst bei dieser Ausführungsform nur eine Halbbrücke 12 mit Dioden.

Die Ausführungsform der Figur 1 stellt somit ein Aktuator-Rückmeldesystem ohne Sensor-Versorgungszuleitungen in Form eines Drei-Draht-Konzeptes dar, während die Ausführungsform der Figur 2 ein solches System in der Form eines Vier-Draht-Konzeptes zeigt. In allen Fällen entfallen separate Zuleitungen zur Beaufschlagung des Positionssensors mit der erforderlichen Versorgungsspannung.

## Patentansprüche

1. Aktuator mit einem von einer Steuereinheit angesteuerten elektrischen Motor und einem aktiven elektronischen Positionssensor zur Erfassung der Aktuatorposition, wobei elektrische Energie für den Betrieb des Positionssensors über die Motoranschlüsse der Ansteuerleitung des Motors von der Steuereinheit entnommen wird, wobei die beiden Motoranschlüsse (5, 6) der Ansteuerspannung U_{M1} und U_{M2} für den Betrieb des Motors (4) so geschaltet sind, dass mindestens ein Motoranschluss (5, 6) in periodischen Abständen eine positive getaktete Spannung dadurch liefert, **dadurch gekennzeichnet, dass** hinter dem Abgriff der Motoranschlüsse (5,6) eine Gleichrichterschaltung mit Vorwiderstand (7) und Speicherkondensator (8) vorgesehen ist,
wobei während eines Motorleerlaufs einer der beiden Motoranschlüsse (5, 6) der Ansteuerspannung U_{M1} und U_{M2} mit einer positiven Spannung U_{B} geschaltet ist und während einer Motorbremse mindestens einer der beiden Motoranschlüsse (5, 6) der Ansteuerspannung U_{M1} und U_{M2} mit einer positiven Spannung U_{B} geschaltet ist.

2. Aktuator nach Anspruch 1, **dadurch gekennzeichnet, dass** eine gemeinsame Masse für eine Brückenschaltung der Motoransteuerung und Signalauswertung vorhanden ist.

3. Aktuator nach einem der Ansprüche 1 oder 2,
**dadurch gekennzeichnet, dass** die Ausgangssignale des Positionssensors (9) innerhalb eines festgelegten Bereiches von der Versorgungsspannung unabhängig bleiben.

4. Aktuator nach einem der vorangehenden Ansprüche,
**dadurch gekennzeichnet, dass** hinter dem Abgriff der Motoranschlüsse (5, 6) der Ansteuerleitung von der Steuereinheit (1) eine Gleichrichterschaltung mit Speicherkondensator (8) zur Erzeugung einer gefilterten Gleichspannung angeordnet ist, die den elektronischen Positionssensor (9) mit einer ausreichenden Spannung versorgt.

5. Aktuator nach Anspruch 4, **dadurch gekennzeichnet, dass** des weiteren ein Vorwiderstand (7) vorgesehen ist.

6. Aktuator nach Anspruch 4 oder 5, **dadurch gekennzeichnet, dass** die Gleichrichterschaltung eine Brückenschaltung (13) umfasst.

7. Aktuator nach einem der Ansprüche 4 bis 6,
**dadurch gekennzeichnet, dass** eine separate Masseleitung (11) zum Positionssensor (9) geführt ist und dass die Gleichrichterschaltung nur eine Halbbrücke (12) aufweist.

8. Aktuator nach einem der Ansprüche 4 bis 7,
**dadurch gekennzeichnet, dass** die Gleichrichterschaltung aus aktiven Transistoren besteht.

9. Aktuator nach einem der vorangehenden Ansprüche,
**dadurch gekennzeichnet, dass** er einen bürstenlosen Motor mit zwei oder mehr Anschlüssen aufweist.

## Claims

1. Actuator having an electric motor controlled by a control unit and having an active electronic position sensor for detecting the actuator position, wherein electrical energy for the operation of the position sensor is tapped from the control unit via the motor terminals of the motor control line, wherein the two motor terminals (5, 6) of the control voltage U_{M1} and U_{M2} for the operation of the motor (4) are switched such that at least one motor terminal (5, 6), at periodic intervals, delivers a positive pulsed voltage, **characterized in that** a rectifier circuit having a series resistor (7) and storage capacitor (8) is provided down-circuit of the motor terminal (5, 6) tap-off,
wherein, during the idling of the motor, one of the two motor terminals (5, 6) of the control voltage U_{M1} and U_{M2} carries a positive voltage U_{B} and, during the braking of the motor, one of the two motor terminals (5, 6) of the control voltage U_{M1} and U_{M2} carries a positive voltage U_{B}.

2. Actuator according to Claim 1, **characterized in that** a common ground potential is available for a bridge circuit of the motor control system and the signal evaluation system.

3. Actuator according to Claim 1 or 2, **characterized in that** the output signals of the position sensor (9), within a specified range, remain independent of the supply voltage.

4. Actuator according to one of the preceding claims, **characterized in that**, down-circuit of the motor terminal (5, 6) tap-off on the control line of the control unit (1), a rectifier circuit with a storage capacitor (8) for the generation of a filtered DC voltage is arranged, which delivers a sufficient voltage to the electronic position sensor (9).

5. Actuator according to Claim 4, **characterized in that** a series resistor (7) is also provided.

6. Actuator according to Claim 4 or 5, **characterized in that** the rectifier circuit comprises a bridge circuit (13).

7. Actuator according to one of Claims 4 to 6, **characterized in that** a separate ground connection line (11) is routed to the position sensor (9), and **in that** the rectifier circuit is only provided with a half-bridge (12).

8. Actuator according to one of Claims 4 to 7, **characterized in that** the rectifier circuit is comprised of active transistors.

9. Actuator according to one of the preceding claims, **characterized in that** it is provided with a brushless motor with two or more terminals.

## Revendications

1. Actionneur comprenant un moteur électrique commandé par une unité de commande et un capteur de position électronique actif destiné à détecter la position de l'actionneur, l'énergie électrique destinée au fonctionnement du capteur de position étant prise sur l'unité de commande par le biais des bornes de moteur de la ligne de commande du moteur, les deux bornes de moteur (5, 6) de la tension de commande Uₘ₁ et Uₘ₂ destinées au fonctionnement du moteur (4) étant commutées de telle sorte qu'au moins une borne de moteur (5, 6) fournit une tension pulsée positive à intervalles périodiques, **caractérisé en ce qu'**un circuit redresseur pourvu d'une résistance série (7) et d'un condensateur de puissance (8) est prévu en arrière de la prise des bornes de moteur (5, 6), l'une des deux bornes de moteur (5, 6) de la tension de commande Uₘ₁ et Uₘ₂ étant commutée avec une tension positive U_{B} pendant un ralenti du moteur et l'une au moins des deux bornes de moteur (5, 6) de la tension de commande Uₘ₁ et Uₘ₂ étant commutée avec une tension positive U_{B} pendant un freinage du moteur.

2. Actionneur selon la revendication 1, **caractérisé en ce qu'**il est prévu une masse commune pour un circuit en pont de la commande de moteur et une évaluation de signal.

3. Actionneur selon l'une des revendications 1 et 2, **caractérisé en ce que** les signaux de sortie du capteur de position (9) restent indépendants de la tension d'alimentation dans une plage spécifiée.

4. Actionneur selon l'une des revendications précédentes, **caractérisé en ce qu'**un circuit redresseur pourvu d'un condensateur de puissance (8) destiné à générer une tension continue filtrée et alimentant le capteur de position électronique (9) avec une tension suffisante est disposé en arrière de la prise des bornes de moteur (5, 6) de la ligne de commande provenant de l'unité de commande (1).

5. Actionneur selon la revendication 4, **caractérisé en ce qu'**une résistance série (7) est également prévue.

6. Actionneur selon la revendication 4 ou 5, **caractérisé en ce que** le circuit redresseur comprend un circuit en pont (13).

7. Actionneur selon l'une des revendications 4 à 6, **caractérisé en ce qu'**une ligne de masse distincte (11) est amenée au capteur de position (9) et **en ce que** le circuit redresseur ne comporte qu'un demi-pont (12).

8. Actionneur selon l'une des revendications 4 à 7, **caractérisé en ce que** le circuit redresseur comprend des transistors actifs.

9. Actionneur selon l'une des revendications précédentes, **caractérisé en ce qu'**il comporte un moteur sans balais pourvu de deux bornes ou plus.
